Europäisches Patentamt

European Patent Office

Office européen des brevets

(11) Veröffentlichungsnummer: **0 248 099**

**A1**

(12) **EUROPÄISCHE PATENTANMELDUNG**

(21) Anmeldenummer: 86107659.4

(22) Anmeldetag: 05.06.86

(51) Int. Cl.4: **C03B 5/027** , C03B 5/26 , C03B 5/42 , C03B 37/08

(43) Veröffentlichungstag der Anmeldung:
09.12.87 Patentblatt 87/50

(84) Benannte Vertragsstaaten:
AT BE CH DE FR GB IT LI LU NL SE

(71) Anmelder: **Sorg GmbH & Co. KG**
**Im Aller 23 Postfach 520**
**D-8770 Lohr/Main(DE)**

(72) Erfinder: **Pieper, Helmut**
**Buchenstrasse 19**
**D-8770 Lohr/Main(DE)**

(74) Vertreter: **Patentanwälte Schulze Horn und**
**Hoffmeister**
**Goldstrasse 36**
**D-4400 Münster(DE)**

(54) **Glasschmelzofen, insbesondere für Faserglas, mit elektrischer Beheizung und Verfahren zum Betrieb des Faserglasschmelzofens.**

(57) Glasschmelzofen, insbesondere für Faserglas, mit elektrischer Beheizung mit einer eine Glasschmelze unterhalb einer Schwimmschicht von Gemenge aufnehmenden Wanne, deren Wände mit einer Wandbeheizeinrichtung und einer Isolierung und deren Bodenbereiche mit einer Anordnung von Spinndüsen ausgebildet sind, und welcher in die Glasschmelze eintauchende, an eine regelbare Stromquelle angeschlossene Beheizungselektroden aufweist, wobei die Elektroden (1) im wesentlichen vertikal von oben nach unten in die Glasschmelze (2) eintauchend angeordnet sind und Mittel (3) zur höhenveränderlichen Einstellung der Eintauchtiefe (E) aufweisen, sowie Verfahren zum Betrieb des Glasschmelzofens bei welchem ein isothermer Zustand des geschmolzenen Glasmaterials innerhalb eines vorgegebenen Temperaturniveaus im Bereich oberhalb der Spinndüsen erstrangig durch Einstellen der Eintauchtiefe der Elektroden hergestellt wird.

Fig.1

## Glasschmelzofen, insbesondere für Faserglas, mit elektrischer Beheizung und Verfahren zum Betrieb des Faserglasschmelzofens

Die Erfindung betrifft einen Glasschmelzofen, insbesondere für Faserglas, mit elektrischer Beheizung mit einer eine Glasschmelze unterhalb einer Schwimmschicht von Gemenge aufnehmenden Wanne, deren Wände mit einer Wandbeheizeinrichtung und einer Isolierung und deren Bodenbereiche mit einer Anordnung von Spinndüsen ausgebildet sind, und welcher in die Glasschmelze eintauchende, an eine regelbare Stromquelle angeschlossene Beheizungselektroden aufweist. Ferner betrifft die Erfindung ein Verfahren zum Betrieb des erfindungsgemäß ausgebildeten Glasschmelzofens, insbesondere für Faserglas.

Es sind Glasschmelzvorrichtungen für die kontinuierliche Herstellung von Glas bekannt mit unterschiedlichen Bereichen zum Schmelzen der Beschickungsmaterialien, zum Läutern des Glases in einem nachfolgenden Bereich sowie zur Abkühlung des geschmolzenen Glases auf eine geeignete Verarbeitungstemperatur in einem Bearbeitungsbereich. Die Bereiche sind im wesentlichen getrennt und in horizontaler Folge angeordnet.

Weiterhin ist aus der DD-Patentschrift 216 707 ein elektrisch beheizter Schmelzofen und ein Verfahren zum Her stellen eines geschmolzenen Materials aus einer aus festen Teilen bestehenden Beschickungsschicht bekannt. Bei dieser sind die unterschiedlichen Bereiche vertikal untereinander in einer Kammer aus hitzebeständigem Material angeordnet, wobei diese Kammer in ihrem Boden Auslaßöffnungen aufweist, die mit dem das Fertigprodukt formenden Bereich in Verbindung stehen. In dieser Kammer ist eine erste Gruppe und darunter eine zweite Gruppe von Horizontal und mit seitlichem Abstand einzeln angeordnete Elektroden vorgesehen. Diese sind im Bereich des geschmolzenen Materials in horizontaler Erstreckung durch die Wände der Kammer hindurchgeführt.

Von Nachteil sind hierbei die Wanddurchbrüche, durch welche die Elektroden in das Schmelzbad horizontal hineinragend hindurchgeführt sind. Weil infolge der thermischen Belastung und der unterschiedlichen Ausdehnungskoeffizienten unterschiedliche Dehnungen zwischen den Elektroden und der Wand eintreten, sind die entsprechenden Wandbereiche gefährdet und demzufolge reparaturanfällig. Ein Ersatz der Elektroden während des Schmelzbetriebes der Kammer ist, wenn überhaupt, nur unter größten Schwierigkeiten möglich. Darüber hinaus erzeugt die Stellung der Elektroden eine Badkonvention, welche die Einhaltung eines isothermen Zustandes der Schmelze oberhalb des Bodens erschwert. Zudem erzeugt die Badkonvektion Auswaschungen an der feuerfesten Auskleidung der Kammer.

Ein weiterer Nachteil ergibt sich dadurch, daß die Einhaltung gleichförmiger thermischer Bedingungen über einem gegebenen horizontalen Querschnitt des Glaskörpers aus geschmolzenem Material ausschließlich durch die steuerbare Versorgung mit elektrischem Strom ermöglicht wird. Hierbei ergeben sich außerordentlich schwierig zu beherrschende regelungstechnische Probleme, weil die Zeitkonstante bei der Einstellung der erforderlichen Energieeinspeisung vielfach zur Überregelung und damit zu unerwünschten Temperaturabweichungen führt.

Der Erfindung liegt die Aufgabe zugrunde, einen Glasschmelzofen, insbesondere für Faserglas, mit elektrischer Beheizung der eingangs genannten Art anzugeben, welcher die angesprochenen Nachteile und technischen Grenzen überwindet, der eine problemlose und überregelungssichere Einstellung eines isothermen Zustandes oberhalb der Spinndüsen mit wirtschaftlichen Mitteln ermöglicht, der zudem infolge geringer Reparaturanfälligkeit eine hohe Verfügbarkeit und damit wirtschaftlichen Betrieb aufweist und zudem eine zur Durchführung erforderlicher Überholungs-und Wartungsarbeiten vorteilhaft günstige Ausgestaltung besitzt.

Die Lösung der gestellten Aufgabe gelingt bei einem Glasschmelzofen, insbesondere für Faserglas, der im Oberbegriff gekennzeichneten Art mit der Erfindung dadurch, daß die Elektroden im wesentlichen vertikal von oben nach unten in die Glasschmelze eintauchend angeordnet sind und Mittel zur höhenveränderlichen Einstellung der Eintauchtiefe aufweisen.

Sehr überraschend ergibt sich mit der vertikal in die Glasschmelze eintauchenden Anordnung der Elektroden sowie durch das Vorhandensein von Mitteln zu deren höhenveränderlichen Einstellung der Eintauchtiefe die Möglichkeit, problemlos und ohne die Schwierigkeit von Überregelungserscheinungen bei im wesentlichen konstanter Energiezufuhr im Verhältnis zu einer im wesentlichen konstanten Aufgabemenge von Frischgut einen stabilen isothermen Zustand des geschmolzenen Glasmaterials innerhalb eines vorgegebenen Temperaturniveaus im Bereich oberhalb der Spinndüsen herzustellen. WEil die Elektroden bei dieser Anordnung nicht durch die Wandungen des Ofens hindurchgeführt und im wesentlichen im Abstand von diesen Wandungen angeordnet sind, wird die feuerfeste Auskleidung des Ofens geschont und auch nicht von übermäßigen konvektiven Beanspruchungen beschädigt.

Weitere sehr vorteilhafte und unkomplizierte Ausgestaltungen des Glasschmelzofens, insbesondere für Faserglas, sind entsprechend den Merkmalen der Ansprüche 2 bis 12 vorgesehen.

Ein ebenfalls sehr unkompliziertes und überraschend vorteilhaftes Verfahren zum Betrieb des nach der Erfindung ausgebildeten Glasschmelzofens, insbesondere für Faserglas, sieht vor, daß ein isothermer Zustand des geschmolzenen Glasmaterials innerhalb eines vorgegebenen Temperaturniveaus im Bereich oberhalb der Spinndüsen erstrangig durch Einstellen der Eintauchtiefe der Elektroden hergestellt wird.

Das Verfahren ist überraschend unkompliziert und effektiv. Eine Stabilisierung des isothermen Zustandes im Bereich oberhalb der Spinndüsen kann gemäß einer Ausgestaltung des Verfahrens problemlos dadurch erreicht werden, daß zweitrangig durch Einstellen eines mehr oder minder großen Wärmeabflußes von den Ofenwandungen nach außen durch vorzugsweise partielles Entfernen bzw. Anfügen beweglicher Isolierungselemente eine vergleichsweise feinfühlige Beeinflussung des erforderlichen Gleichgewichts zwischen Energiezufuhr und Wärmeabfuhr hergestellt wird.

Eine Ausgestaltung des Verfahrens sieht vor, daß ein isothermer Zustand des geschmolzenen Glasmaterials drittrangig durch Einstellen eines Stromflusses im Basinmaterial oberhalb der Spinndüsen hergestellt und dabei diese Einstellung mit sehr minutiösen Einstellungsschritten mit Langzeitwirkung hergestellt wird. Und schließlich sieht eine Ausgestaltung des Verfahrens vor, daß unter Aufrechterhaltung des Ofenbetriebes während des Auswechselns einer dieser Spinndüsen rein örtlich Glasmasse dicht oberhalb der auszuwechselnden Spinndüse durch Abkühlen unter Verwendung eines in die Glasmasse eintauchbar eingeführten Tauschkühlkörpers eingefroren, sodann die Spinndüse ausgewechselt und darauf der Tauchkühlkörper nach Abstellen des Kühlmediums entfernt bzw. in die Schmelzzone hochgezogen und die eingefrorene Glasmasse zum Schmelzen gebracht wird.

Die Erfindung wird in Zeichnungen in einer bevorzugten Ausführungsform gezeigt, wobei aus den Zeichnungen weitere vorteilhafte Einzelheiten der Erfindung entnehmbar sind. Es zeigen:

Figur 1 einen Glasschmelzofen, insbesondere für Faserglas, in rein schematischer Darstellung, im Schnitt entlang einer vertikalen Schnittebene;

Figur 2 a bis Figur 2 d in Draufsicht auf den Bodenbereich im Querschnitt unterschiedlich ausgestaltete Schmelzöfen prinzipiell ähnliche, jedoch unterschiedliche Anordnungen von Spinndüsen sowie, in vertikaler Projektion gesehen, entsprechende Zuordnungen von Elektroden und Spinndüsenöffnungen, im Schnitt gemäß einer horizontalen Schnittebene II - II in Figur 1.

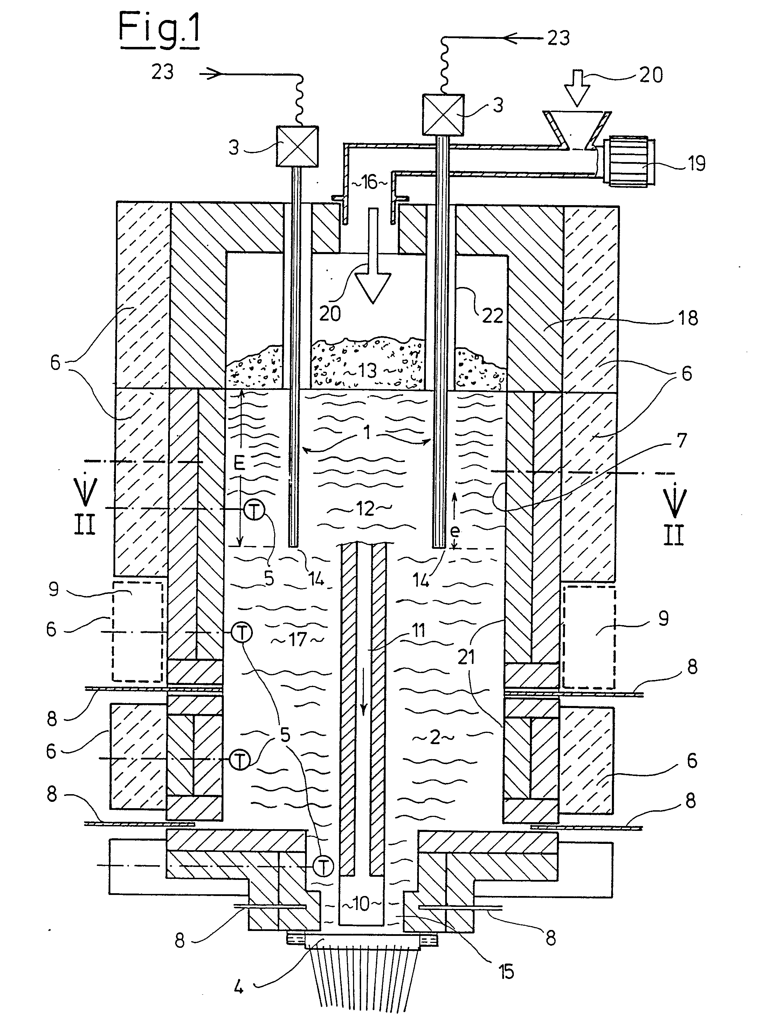

Der Glasschmelzofen, insbesondere für Faserglas, in der schematischen Darstellung gemäß Figur 1 weist eine in Form eines Schachtes 17 ausgebildete Ofenwanne 12 auf. Der obere Abschluß wird durch den Oberofen 18 und der unter Abschluß durch den Bodenbereich 15 gebildet. Der Ofen weist eine elektrische Beheizung der Glasschmelze 2 durch die Elektroden 1 auf. Der Oberofen 18 weist eine gravimetrisch oder volumetrisch dosierende Beschickungs einrichtung für Beschickungsmaterialien 20 auf. Diese bilden auf der Oberfläche der Schmelze 2 eine Schwimmschicht 13. Der Bodenbereich 15 ist mit einer Anordnung von Spinndüsen 4 ausgebildet.

In erfindungswesentlicher Weise sind die Elektroden 1 im wesentlichen vertikal von oben nach unten in die Glasschmelze 2 eintauchend angeordnet und weisen Mittel 3 zur höhenveränderlichen Einstellung der Eintauchtiefe E auf.

Diese Eintauchtiefe E wird erfindungsgemäß nach Maßgabe eines isothermen Zustandes und einer bestimmten Temperatur im Bodenbereich 15 oberhalb der Spinndüsen 4 eingestellt, weshalb der Ofen in an sich bekannter Weise in unterschiedlichen Hoirzonten, beispielsweise im Schmelzbereich bzw. im Bereich oberhalb der Spinndüsen 4 und in dazwischenliegenden Horizontalen Mittel 5 zur Erfassung der Temperatur des geschmolzenen Materials 2 aufweist.

Die Ofenwände 7 sind innen mit einer hochfeuerfesten Auskleidung 21 und außen mit einer Isolierung 6 hergestellt bzw. ausgekleidet.

Erfindungswesentlich ist die Isolierung 6 der Ofenwände 7 im Bereich einer an sich bekannten Wandbeheizung 8 bzw. oberhalb derselben mit Mitteln 9 zur veränderlichen Einstellung der Wärmedämmung ausgebildet.

Dies wird dadurch in sehr einfacher und wirkungsvoller Weise erreicht, daß Teile der Isolierung 6 beweglich mit abnehmbaren bzw. anfügbaren Elementen 9 ausgebildet bzw. angeordnet sind. In der Figur 1 sind daher die abnehmbaren, beweglichen Isolierungsteile 9 mit einer unterbrochenen Linienführung rein schematisch dargestellt.

Eine weitere Ausgestaltung des Glasschmelzofens, insbesondere für Faserglas, nach der Erfindung sieht vor, daß dieser von oben durch die Glasschmelze 2 bis in einen Bereich dicht oberhalb der Spinndüsen 4 eintauchbar ausgebildete Tauchkühlkörper 10 aufweist. Diese weisen isolierte Zuführungen 11 für ein Kühlmedium, vorzugsweise für Wasser, auf. Wie die rein schematische Darstellung in Figur 1 erkennen läßt, wird ein Tauchkühlkörper 10 erforderlichenfalls bis dicht oberhalb einer Spinndüse 4 von oben her durch die Glasschmelze 2 in den Ofen abgesenkt und vom Kühlwasser 11 durchströmt. Die örtliche Kühlwirkung innerhalb der unmittelbar über einer Spinndüse 4 anstehenden Glasschmelze bewirkt ein Einfrieren eines Schmelzvolumens oberhalb einer auszuwechselnden Spinndüse, welche daraufhin abgebaut und durch eine neue ersetzt werden kann. Diese Maßnahme ist im Gegensatz zu einer beim Stand der Technik üblichen Kühlung von außen her sehr vorteilhaft. Das schockweise Abkühlen von außen her bewirkte bisher erhebliche Schäden an der temperaturwechselempfindlichen hochfeuerfesten Auskleidung im Bereich der Spinndüsen. Durch das partielle Einfrieren eines geringen Glasvolumens unmittelbar oberhalb einer auszuwechselnden Spinndüse werden diese nachteiligen Einwirkungen auf die Feuerfestauskleidung vermieden.

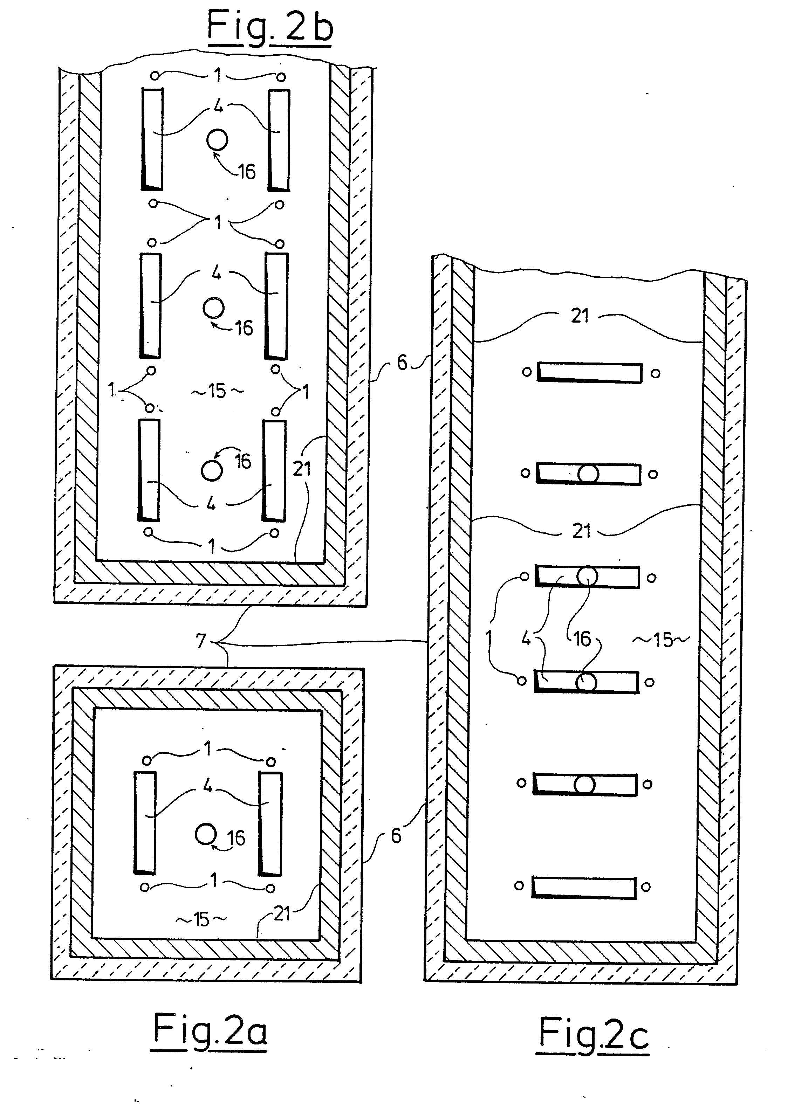

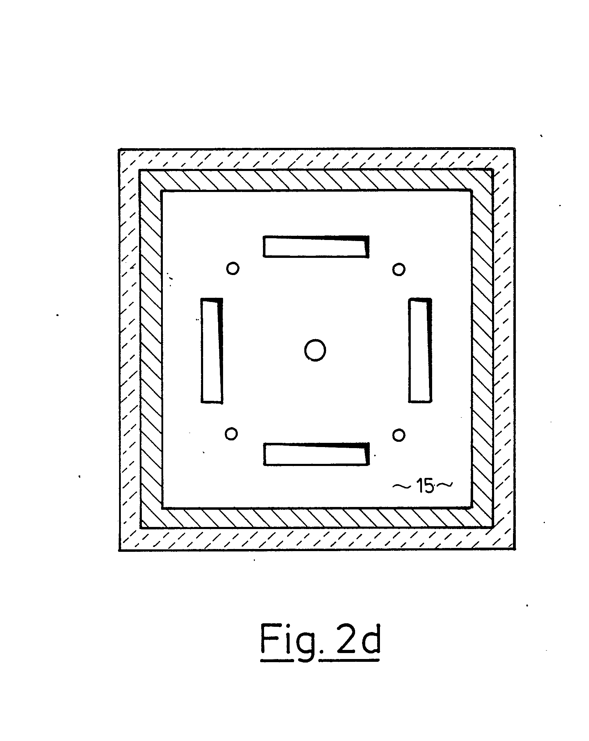

Erfindungswesentlich ist weiterhin die Ofenwanne 12 mit einer im Vergleich zu ihrem Querschnitt (Fig. 2 a bis Fig. 2 d) vergleichsweise großen vertikalen Höhe der Seitenwände 7 im Bereich unterhalb der Schwimmschicht 13 und oberhalb der Spinndüsen 4 in Form eines Schachtes ausgebildet. Dies ist einerseits eine bauliche Voraussetzung für die Einstellung eines Temperaturgleichgewichtes durch regelbar einstellbare Wandungsverluste an Wärme, welche entsprechend vorgängiger Darlegung durch bewegliche Teile der Außenisolierung erreichbar ist. Weiterhin ergibt sich durch diese erfindungswesentliche Dimensionierung des Ofens ein relativ großes Glasvolumen zwischen Schwimmschicht 13 und den Spinndüsen 4, welches die besonders stabile Einhaltung isothermer Zustände innerhalb der Glasschmelze 2 im Bereich oberhalb der Spinndüsen 4 sehr wesentlich erleichtert.

Die Dimensionierung des Glasschmelzofens, insbesondere für Faserglas, in Form eines Schachtes ist aber auch eine der wesentlichen Voraussetzungen für die Wirkung der Elektroden I in ihrer vom Oberofen 18 hängend vertikal in das Schmelzbad 2 eintauchenden Position mit der Eintauchtiefe E. Im Bereich des Oberofens 18 sind die Elektroden 1 in Schutzrohren 22 geführt. Mit Hilfe der rein schematisch gezeigten Einstellmittel 3 kann die Eintauchtiefe E der Elektroden 1 um den Betrag e in vertikaler Richtung auf-und abwärts verändert werden. Somit wird bei konstanter Energieeingabe durch die rein schematisch angedeuteten Zuführungskabel 23 in Höhe des Schmelzhorizontes im Verhältnis zu der darunterliegenden Beruhigungszone veränderlich eingestellt und somit die Einstellung des erforderlichen isothermen Zustandes im Bereich der Spinndüsen erstrangig und mit sehr einfachen Mitteln beeinflußt. Weiterhin ergibt sich mit der vertikalen Anordnung der Elektroden der gravierende Vorteil, daß eine Durchführung durch die seitlichen Ofenwände im Bereich der geschmolzenen Materialmasse nicht mehr erforderlich ist. Darüber hinaus bleibt eine thermische Konvektion innerhalb des Schmelzbades 2 auf einen relativ engen Bereich des Konvektionssystems begrenzt, so daß Auswaschung an der Feuerfestauskleidung der Innenwand 7 weitgehend vermieden wird. Darüber hinaus können die Elektroden 1 problemlos gezogen und gegebenenfalls gewartet oder erneuert werden.

Die zur Erzeugung eines Wärmegleichgewichts hilfreiche Wandbeheizung 8 ist bei dem in Form eines Schachtes ausgebildeten Glasschmelzofens, insbesondere für Faser glas, mit Vorteil im Bereich des unteren Drittels des schachtförmigen Ofenbereiches angeordnet. Und ebenfalls mit sehr großem Vorteil sind die beweglich ausgebildeten Elemente 9 der Isolierung 6 im wesentlichen im mittleren Bereich des Ofenschachtes unterhalb der freien Enden 14 der Elektroden 1 und oberhalb der Wandbeheizung 8 vorgesehen.

Insgesamt ergibt sich durch diese Anordnung der Schmelzzone, die darunterliegende Beruhigungszone und die zuunterst liegende Verarbeitungszone innerhalb des schachtförmigen Ofenraumes 12 eine sehr unkomplizierte Einstellbarkeit des gewünschten Isotherm-Zustandes im Bereich der Spinndüsen 4, wobei eine Überregelung oder ein Betrieb im unwirtschaftlichen Bereich mit Vorteil vermieden wird. Wie ergänzend zu Figur 1 aus den Projektionsbildern der Figuren 2 a bis 2 d ersichtlich, weist der Bodenbereich 15 der Ofenwanne 12 wenigstens eine oder mehrere paarweise oder in Reihe angeordnete Spinndüsen 4 auf. Jeder dieser Spinndüsen 4 ist an ihrer Schmalseite, in der vertikalen Projektion gesehen, eine Elektrode 1 zugeordnet.

Weiterhin ist vorzugsweise jeder Spinndüse 4, in der vertikalen Projektion gesehen, eine Gemengezuführungsöffnung 16 im Oberofen 18 zugeordnet. Zur Vermeidung von Wiederholungen sind die entsprechenden Bezugsziffern lediglich in den Figuren 2 a und 2 b eingetragen, während sie in den prinzipiell ähnlichen Figuren 2 c und 2 d aus Gründen der Übersichtlichkeit weggelassen wurden.

Die Zusammenschau der Figuren 2 a bis 2 d im Zusammenhang mit der Darstellung gemäß Figur 1 zeigt lediglich bei prinzipiell gleicher Ausgestaltung des Ofenschachtes 12 die unterschiedlichen Möglichkeiten der Querschnittsgestaltung und der sich daraus ergebenden mehr oder minder großen Durchsatzkapazität des Ofens. Die in den Figuren 2 a bis 2 d ebenfalls rein schematisch dargestellten Ofenwände 7 weisen jeweils eine Schicht Feuerfestauskleidung 21 im Inneren und eine Schicht von Isolierungsmaterial 6 an der Außenseite auf.

Die Betriebsweise des Glasschmelzofens, insbesondere für Faserglas, nach der Erfindung ist bei verständiger Würdigung von Zeichnung und zugehöriger Beschreibung für den Fachmann ersichtlich. Im Dauerbetrieb des Schmelzofens wird kontinuierlich oder quasi-kontinuierlich in volumetrisch oder gravimetrisch exakt dosierter Menge pro Zeiteinheit ein Beschickungsmaterial 20 mit Hilfe der Beschickungseinrichtung 19 aufgegeben und bildet auf der Masse geschmolzenen Materials 12 eine permanente Schwimmschicht 13. Im Bereich der in die Schmelze 2 eintauchenden Elektroden 1 ergibt sich durch Zuführung elektrischer Energie und deren Umsetzung in Wärme eine Schmelzzone im oberen Drittel des Ofenschachtes. Darunter sinkt die Schmelze unter langsamer Abkühlung in Richtung des Bodenbereichs 15 mit sehr geringer Geschwindigkeit ab. Währenddessen wird durch weitere Zufuhr von Wärmeenergie mit der Wandbeheizung 8 und einstellbare Ableitung von Wärme durch die abnehmbaren Isolierungselemente 9 ein sehr feinfühlig einstellbares Temperaturgefälle von der Schmelzzone bis zur Verarbeitungszone im Bereich der Spinndüsen 4 hergestellt. Dabei erfolgt die Grobeinstellung im Verhältnis von Energiezuführung und Schmelzleistung bzw. Aufheizung des Schmelzbades erstrangig durch die Grundeinstellung der zugeführten Energie und die Einstellung der Eintauchtiefe E der Elektroden 1 und deren Korrektur um den Betrag e. Hierfür sind die nicht näher beschriebenen Mittel 3 zur Höheneinstellung der Elektroden 1 vorgesehen.

Zum Schutz der Elektroden 1 im Raum des Oberofens gegen Anhaften des Beschickungsmaterials sind diese in Schutzrohren 22 geführt.

Unterhalb der Schmelzzone 1 erfolgt im schachtförmigen Mittelbereich der Ofenwanne 12 eine Feineinstellung des Wärmegleichgewichtes durch Ausbalancierung von Wärmezufluß und Wärmeabfluß mit Hilfe einerseits der einstellbaren Wandbeheizung 8 und andererseits der einstellbaren Wärmedämmung durch die abnehmbaren Isolierungselemente 9.

Im übrigen ist beim erfindungsgemäß ausgebildeten Glasschmelzofen, insbesondere für Faserglas, das Problem der Auswechselbarkeit einzelner Spinndüsen 4 optimal gelöst. Diese können ohne Betriebsunterbrechung durch örtliches Einfrieren einer geringen Menge Glasschmelze im Bereich der auszuwechselnden Spinndüse 4 problemlos ausgewechselt werden. Zu diesem Zweck wird ein Tauchkühlkörper 10 mit einer stark isolierenden Kühlwasserzuführung von oben her durch das Schmelzbad 2 bis in den unmittelbaren Bereich der auszutauschenden Spinndüse 4 abgesenkt und oberhalb derselben Glasmasse zum Erstarren gebracht. Bei dieser Maßnahme wird infolge der bekannt schlechten Wärmeleitung des Glases eine thermische Schockwirkung auf die hochfeuerfeste Innenwandauskleidung vermieden und das Auswechseln einer Spinndüse 4 problemlos durchführbar gemacht.

Der Glasschmelzofen, insbesondere für Faserglas, nach der Erfindung verbindet somit ein optimales Betriebsverhalten durch unkomplizierte Einstellung isothermer Zustände der Glasmasse im Verarbeitungsbereich mit unkomplizierter, wirtschaftlicher Bauweise und bestmöglichen Gegebenheiten zur Wartung und besitzt infolgedessen bei einer äußerst gleichmäßigen Leistung ein Höchstmaß an Verfügbarkeit. Insofern kann von einer idealen Lösung der eingangs gestellten Aufgabe gesprochen werden.

**Ansprüche**

1. Glasschmelzofen, insbesondere für Faserglas, mit elektrischer Beheizung mit einer eine Glasschmelze unterhalb einer Schwimmschicht von Gemenge aufnehmenden Wanne, deren Wände mit einer Wandbeheizeinrichtung und einer Isolierung und deren Bodenbereiche mit einer Anordnung von Spinndüsen ausgebildet sind, und welcher in die Glasschmelze eintauchende, an eine regelbare Stromquelle angeschlossene Beheizungselektroden aufweist, dadurch gekennzeichnet, daß die Elektroden (1) im wesentlichen vertikal von oben nach unten in die Glasschmelze (2) eintauchend angeordnet sind und Mittel (3) zur höhenveränderlichen Einstellung der Eintauchtiefe (E) aufweisen.

2. Glasschmelzofen, insbesondere für Faserglas, nach Anspruch 1, dadurch gekennzeichnet, daß dieser im Bereich oberhalb der Spinndüsen (4) sowie im Schmelzbereich und vorzugsweise in mehreren dazwischenliegenden Horizonten Mittel (5) zur Erfassung der Temperatur des geschmolzenen Materials (2) aufweist.

3. Glasschmelzofen, insbesondere für Faserglas, nach Anspruch 1, dadurch gekennzeichnet, daß die Isolierung (6) der Ofenwände (7) im Bereich der Wandbeheizung (8) bzw. oberhalb derselben mit Mitteln (9) zur veränderlichen Einstellung der Wärmedämmung ausgebildet ist.

4. Glasschmelzofen, insbesondere für Faserglas, nach Anspruch 3, dadurch gekennzeichnet, daß Teile der Isolierung (6) beweglich mit abnehmbaren bzw. anfügbaren Elementen (9) ausgebildet bzw. angeordnet sind.

5. Glasschmelzofen, insbesondere für Faserglas, nach einem der Ansprüche 1 bis 4, dadurch gekennzeichnet, daß dieser von oben durch die Glasschmelze (2) bis in einen Bereich dicht oberhalb der Spinndüsen (4) eintauchbar ausgebildete bzw. angeordnete Tauchkühlkörper (10) aufweist.

6. Glasschmelzofen, insbesondere für Faserglas, nach Anspruch 5, dadurch gekennzeichnet, daß die Tauchkühlkörper (10) isolierte Zuführungen (11) für ein Kühlmedium, vorzugsweise für Wasser, aufweisen.

7. Glasschmelzofen, insbesondere für Faserglas, nach einem der Ansprüche 1 bis 6, dadurch gekennzeichnet, daß die Ofenwanne (12) mit einen im Vergleich zu ihrem Querschnitt vergleichsweise großen vertikalen Höhe ihrer Seitenwände (7) im Bereich unterhalb der Schwimmschicht (13) und oberhalb der Spinndüsen (4) in Form eines Schachtes ausgebildet ist.

8. Glasschmelzofen, insbesondere für Faserglas, nach einem der Ansprüche 1 bis 7, dadurch gekennzeichnet, daß die Elektroden (1) bis etwa zu zwei Dritteln der Höhe (H) des schachtförmigen Ofenbereichs in das geschmolzene Material (2) eintauchbar ausgebildet bzw. angeordnet sind.

9. Glasschmelzofen, insbesondere für Faserglas, nach einem der Ansprüche 1 bis 8, dadurch gekennzeichnet, daß die Wandbeheizung (8) im wesentlichen im Bereich des unteren Drittels des schachtförmigen Ofenbereichs angeordnet ist.

10. Glasschmelzofen, insbesondere für Faserglas, nach einem der Ansprüche 1 bis 9, dadurch gekennzeichnet, daß die beweglich ausgebildeten Elemente (9) der Isolierung (6) im wesentlichen im mittleren Bereich des Ofenschachtes unterhalb der freien Enden (14) der Elektroden (1) und oberhalb der Wandbeheizung (8) vorgesehen sind.

11. Glasschmelzofen, insbesondere für Faserglas, nach einem der Ansprüche 1 bis 10, dadurch gekennzeichnet, daß der Bodenbereich (15) der Ofenwanne (12) wenigstens eine oder mehrere paarweise und/oder in Reihe angeordnete Spinndüsen (4) aufweist und jeder Spinndüse (4) an ihrer Schmalseite, in der vertikalen Projektion gesehen, eine Elektrode (1) zugeordnet ist.

12. Glasschmelzofen, insbesondere für Faserglas, nach einem der Ansprüche 1 bis 11, dadurch gekennzeichnet, daß vorzugsweise jeder Spinndüse (4), in der vertikalen Projektion gesehen, eine Gemengezuführung (16) für Aufgabegut zugeordnet ist.

13. Verfahren zum Betrieb des nach den Ansprüchen 1 bis 12 ausgebildeten Glasschmelzofens, insbesondere für Faserglas, dadurch gekennzeichnet, daß ein isothermer Zustand des geschmolzenen Glasmaterials innerhalb eines vorgegebenen Temperaturniveaus im Bereich oberhalb der Spinndüsen erstrangig durch Einstellen der Eintauchtiefe der Elektroden hergestellt wird.

14. Verfahren nach Anspruch 13, dadurch gekennzeichnet, daß ein isothermer Zustand des geschmolzenen Glasmaterials innerhalb eines vorgegebenen Temperaturniveaus im Bereich oberhalb der Spinndüsen zweitrangig durch Einstellen eines mehr oder minder großen Wärmeabflusses von den Ofenwandungen nach außen durch vorzugsweise partielles Entfernen bzw. Anfügen beweglicher Isolierungselemente hergestellt wird.

15. Verfahren nach Anspruch 13 und 14, dadurch gekennzeichnet, daß ein isothermer Zustand des geschmolzenen Glasmaterials innerhalb eines vorgegebenen Temperaturniveaus drittrangig durch Einstellen der zugeführten Energiemenge im Basinbereich oberhalb der Spinndüsen hergestellt wird.

16. Verfahren nach einem der Ansprüche 13 bis 15, dadurch gekennzeichnet, daß unter Aufrechterhaltung des Ofenbetriebes oberhalb der Spinndüsen während des Auswechselns einer dieser Spinndüsen rein örtlich Glasmasse dicht oberhalb der auszuwechselnden Spinndüse durch Abkühlen unter Verwendung eines in die Glasmasse eintauchbar eingeführten Tauchkühlkörpers eingefroren, sodann die Spinndüse ausgewechselt und darauf der Tauchkühlkörper nach Abstellen des Kühlmediums entfernt bzw. in die Schmelzzone hochgezogen und die eingefrorene Glasmasse zum Schmelzen gebracht wird.

# Fig.1

Fig. 2b

Fig. 2a

Fig. 2c

~15~

Fig. 2d

Europäisches
Patentamt

**EUROPÄISCHER RECHERCHENBERICHT**

Nummer der Anmeldung

EP 86 10 7659

## EINSCHLÄGIGE DOKUMENTE

| Kategorie | ˙ Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 399 544  (G.J. MONAGHAN)  * Anspruch 8; Figur 1; Abstract * | 1,7,11 ,13 | C 03 B   5/027 C 03 B   5/26 C 03 B   5/42 C 03 B  37/08 |
| A | WO-A-8 400 746  (OWENS-CORNING FIBERGLAS CORP.)  *   Ansprüche   1,7,19,20,27,29; Figur 2 * | | |
| A | US-A-3 650 726  (W.C. HYND)  * Anspruch 1; Figur 4 * | 3,4 | |
| A | EP-A-0 118 580  (SORG GMBH & CO. KG)  * Ansprüche 1,5 * | | |

RECHERCHIERTE SACHGEBIETE (Int. Cl.4)

C 03 B   5/00
C 03 B  37/00

Der vorliegende Recherchenbericht wurde für alle Patentansprüche erstellt.

| Recherchenort | Abschlußdatum der Recherche | Prüfer |
|---|---|---|
| BERLIN | 23-01-1987 | STROUD J.G. |